# EUROPÄISCHE PATENTSCHRIFT

(11) **EP 2 455 234 B1**
(45) Veröffentlichungstag und Bekanntmachung des Hinweises auf die Patenterteilung: **19.06.2013**
(21) Anmeldenummer: 11181011.5
(22) Anmeldetag: 13.09.2011
(51) Int. Cl.: B60C 11/13

(54) **Laufstreifenprofil eines Fahrzeugluftreifens**
Run strip profile of a vehicle tyre
Profil de bande de roulement d'un bandage pneumatique de véhicule

(30) Priorität: 17.11.2010 DE 102010060617
(43) Veröffentlichungstag der Anmeldung: 23.05.2012
(73) Patentinhaber: Continental Reifen Deutschland GmbH, 30165 Hannover (DE)
(72) Erfinder: Behr, Ulrich, 30169 Hannover (DE)
(74) Vertreter: Finger, Karsten

(56) Entgegenhaltungen:
- WO-A1-01/05608
- DE-A1- 1 505 020

## Beschreibung

Die Erfindung betrifft ein Laufstreifenprofil eines Fahrzeugluftreifens mit wenigstens einer in Umfangsrichtung U des Fahrzeugreifens ausgerichteten und über den Umfang erstreckten Profilblockreihe, welche in axialer Richtung A zu beiden Seiten hin jeweils durch eine Umfangsrille begrenzt und aus in Umfangsrichtung hintereinander angeordneten, von der einen zur anderen Umfangsrille erstreckten quer oder schräg verlaufenden Rillen von einander beabstandeten Profilblockelementen ausgebildet ist, wobei die Profilblockelemente nach radial außen von einer die Bodenkontaktfläche bildenden radial äußeren Oberfläche begrenzt sind, wobei die Rillen in radialer Richtung R nach innen jeweils von einem Rillengrund und in Umfangsrichtung beiderseits des Rillengrundes jeweils durch eine Rillenwand begrenzt sind, die sich ausgehend vom Rillengrund nach radial außen bis zu der radial äußeren Oberfläche des von ihr begrenzten Profilblockelementes erstreckt und dabei jeweils die zur Rille hin gerichtete Flanke des Profilblockelementes bildet.

Derartige Fahrzeugluftreifen sind bekannt. Es ist auch bekannt, derartige Fahrzeugluftreifen mit Profilblockreihen mit Schräg- oder Querrillen auszubilden, bei denen die die Querrillen begrenzenden Profilblockelementflanken mit einem Neigungswinkel zur Radialen ausgebildet sind. Es wurde auch gelegentlich vorgeschlagen zur Verbesserung von Trockenperformance-Eigenschaften - wie Handling oder Bremsen auf trockener Straße - den Übergang zwischen Profilblockelementflanke und radial äußerer, das Profilblockelement begrenzender Oberfläche mit einer Phase auszubilden. Hierdurch kann beim Auftreffen des zwischen radial äußerer Oberfläche und Profilblockelementflanke ausgebildeten Übergangsbereichs auf die Straßenoberfläche ein Einrollen vermieden werden, wodurch Handling und Bremseigenschaften verbessert werden können. Allerdings wird der Übergangsbereich zwischen radial äußerer Oberfläche und Profilblockelementflanke durch die ausgebildete Phase in ihrer Steifigkeit erhöht, wodurch die Geräuschbildung beim Auftreffen der Phase auf die Straßenoberfläche begünstigt wird.

Der Erfindung liegt daher die Aufgabe zugrunde, bei derartigen Fahrzeugluftreifen mit einfachen Mitteln gute Trockenperformanceeigenschaften mit verbesserter Geräuschentwicklung zu schaffen.

Die Aufgabe wird erfindungsgemäß durch die Ausbildung eines Laufstreifenprofils eines Fahrzeugluftreifens mit wenigstens einer in Umfangsrichtung U des Fahrzeugreifens ausgerichteten und über den Umfang erstreckten Profilblockreihe, welche in axialer Richtung A zu beiden Seiten hin jeweils durch eine Umfangsrille begrenzt und aus in Umfangsrichtung hintereinander angeordneten, von der einen zur anderen Umfangsrille erstreckten quer oder schräg verlaufenden Rillen von einander beabstandeten Profilblockelementen ausgebildet ist, wobei die Profilblockelemente nach radial außen von einer die Bodenkontaktfläche bildenden radial äußeren Oberfläche begrenzt sind, wobei die Rillen in radialer Richtung R nach innen jeweils von einem Rillengrund und in Umfangsrichtung beiderseits des Rillengrundes jeweils durch eine Rillenwand begrenzt sind, die sich ausgehend vom Rillengrund nach radial außen bis zu der radial äußeren Oberfläche des von ihr begrenzten Profilblockelementes erstreckt und dabei jeweils die zur Rille hin gerichtete Flanke des Profilblockelementes bildet, gemäß den Merkmalen von Anspruch 1 gelöst, bei dem die Rille in ihrer Erstreckung von Umfangsrille zu Umfangsrille aus zwei Randbereichen, welche jeweils an eine der Umfangsrillen angrenzen, und aus einem zwischen den Randbereichen angeordneten Mittenbereich ausgebildet ist, wobei in den Randbereichen jeweils in den Querschnittsebenen senkrecht zum Rillenverlauf die erste durch die Rille begrenzte Flanke aus einem in radialer Richtung inneren Erstreckungsbereich mit einem Neigungswinkels β zur Radialen R und aus einem kleineren, eine Fase bildende äußeren Erstreckungsbereich mit einem Neigungswinkels γ zur Radialen R und die zweite durch die Rille begrenzte Flanke im wesentlichen über Ihre gesamte radiale Erstreckung mit einem Neigungswinkels α zur Radialen R ausgebildet ist mit y>α>β, bei dem im mittleren Erstreckungsbereich die erste Flanke eine zylindersegmentförmige Ausbeulung des durch sie begrenzten Profilblockelementes in die Rille hinein und die zweite Flanke eine korrespondierend hierzu ausgebildete zylindersegmentförmige Ausnehmung des durch sie begrenzten Profilblockelementes bildet, wobei die Zylinderachsen der beiden Zylinder im Wesentlichen in radialer Richtung R verlaufen.

Hierdurch wird ermöglicht, dass mit Abstand zu beiden Umfangsrillen im mittleren Erstreckungsbereich der Rille eine weiche Aufschlagkante der Geräuschentstehung entgegenwirkt. In den für die Trockenperformanceeigenschaften wie Bremsen und Handling wichtigen Randbereichen ist die Ausbildung einer Phase gesichert, wodurch die Trockenperformanceeigenschaften wie Handling und Bremsen auf hohem Niveau gesichert umgesetzt werden können. Das korrespondierende Paar aus dem durch die zylindersegmentförmigen Ausbeulung der einen Flanke und der zylindersegmentförmigen Einbuchtung der anderen Flanke behindert darüber hinaus die Geräuschausbreitung durch die Rille zur Reifenseite hin. Die Abrundung der zylindersegmentförmigen Ausbuchtung und der zylindersegmentförmigen Einbuchtung bewirken darüber hinaus eine aus allen Belastungsrichtungen punktförmige Berührung mit der Straßenoberfläche, wodurch trotz geräuschdämpfender Ausbildung des Mittenbereichs auch in diesem für die Trockenperformance von untergeordneter Bedeutung ausgebildeten Erstreckungsbereich noch der Negativeinfluss auf die Trockenperformanceeigenschaften weiter minimiert werden kann.

Besonders vorteilhaft ist die Ausbildung eines Fahrzeugluftreifens gemäß den Merkmalen von Anspruch 2, wobei die Zylinder der beiden Zylindersegmente koaxiale Zylinder sind. Dies sichert einen weitgehend parallelen Verlauf der Flanken im Bereich der Zylindersegmente und einen über die radiale Erstreckung der Rille konstant breiten Durchflusskanal.

Besonders vorteilhaft ist die Ausbildung eines Fahrzeugluftreifens gemäß den Merkmalen von Anspruch 3, wobei die zylindersegmentförmige Ausbeulung der ersten Flanke soweit in die Rille hinein erstreckt ausgebildet ist, dass sie im Rillengrund die Verbindungslinie der Randbereiche der zweiten Flanke berührt. Hierdurch wird der Look-Through-Effekt durch die Rille verhindert und die Schallausbreitung besonders wirkungsvolle behindert.

Besonders vorteilhaft zur Geräuschreduktion bei hoher Kantenstabilität ist die Ausbildung eines Fahrzeugluftreifens gemäß den Merkmalen von Anspruch 4, wobei die in axialer Richtung A des Reifens gemessene Erstreckungslänge c des Mittenbereichs mit (1/3)b ≤ c ≤ 2/3)b - insbesondere mit c = (b/2) - ausgebildet ist, wobei b die in axialer Richtung A des Reifens zwischen den beiden Umfangsrillen gemessene Erstreckungslänge der Rille angibt.

Besonders vorteilhaft ist die Ausbildung eines Fahrzeugluftreifens gemäß den Merkmalen von Anspruch 5, wobei die in axialer Richtung A des Reifens gemessene Erstreckungslänge a der Randbereiche und die in axialer Richtung A des Reifens gemessene Erstreckungslänge c des Mittenbereichs mit (2a)+c=b ausgebildet sind, wobei b die in axialer Richtung A des Reifens zwischen den beiden Umfangsrillen gemessene Erstreckungslänge der Rille angibt. Die hierdurch bedingte symmetrische Ausbildung bewirkt durch ihre Zentrierung beiderseits der Zylindersegmente eine optimal ausgeprägt wirkende Rillenfunktion einer breiten Rille. Gerade bei Schrägrillen mit kleinem Neigungswinkel zur Umfangsrichtung wirkt sich dies besonders positiv aus.

Besonders vorteilhaft zur Erzielung guter Trockenhandling- und Bremseigenschaften ist die Ausbildung eines Fahrzeugluftreifens gemäß den Merkmalen von Anspruch 6, wobei γ mit 30° ≤γ ≤70° - insbesondere mit γ =45° - ausgebildet ist.

Die Erfindung wird im Folgenden an Hand der in den Figuren 1 bis 6 dargestellten Ausführungsbeispiele näher erläutert. Hierin zeigen
- Fig.1 1: eine Draufsicht auf einen Abschnitt eines Laufstreifenprofiles eines PKW-Fahrzeugluftreifens,
- Fig.2: vergrößerter Ausschnittes einer Profilblockreihe von Fig. 1 in Draufsicht,
- Fig.3 3: das Laufstreifenprofil von Fig. 1 in Schnittdarstellung gemäß Schnitt III-III von Fig.2,
- Fig.4: das Laufstreifenprofil von Fig.1 in Schnittdarstellung gemäß Schnitt IV-IV von Fig.2,
- Fig.5: das Laufstreifenprofil von Fig.1 in Schnittdarstellung gemäß Schnitt V-V von Fig.2,
- Fig.6: das Laufstreifenprofil von Fig. in Schnittdarstellung gemäß Schnitt VI-VI von Fig.2.

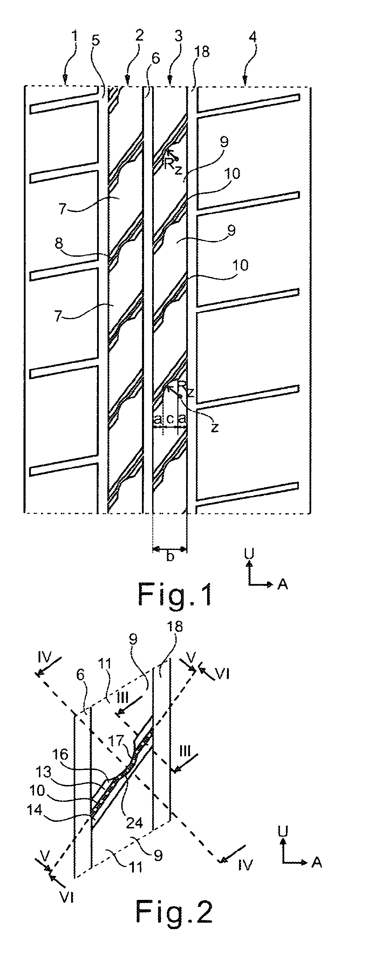

Die Figuren 1 und 2 zeigen ein Laufstreifenprofil eines Fahrzeugluftreifens für Pkw-Fahrzeuge. In Fig. 1 ist dabei ein Ausführungsbeispiel dargestellt, bei welchem in den beiden Reifenschultern jeweils eine Umfangsrippe 1 bzw. 4 ausgebildet ist, die sich jeweils über den gesamten Umfang des Fahrzeugluftreifens erstreckt und in Umfangsrichtung U ausgerichtet ist. Axial zwischen diesen beiden als Schulterrippen ausgebildeten Umfangsrippen 1 und 4 sind zwei in axialer Richtung A nebeneinander angeordnete Profilblockreihen 2 und 3 ausgebildet, welche sich ebenfalls über den gesamten Umfang des Fahrzeugluftreifens erstrecken und in Umfangsrichtung U ausgerichtet sind. Die Schulterrippe 1 und die Profilblockreihe 2 sind in axialer Richtung A durch eine Umfangsrille 5 voneinander beabstandet, welche sich über den gesamten Umfang des Fahrzeugluftreifens erstreckt und in Umfangsrichtung U ausgerichtet ist. Die Profilblockreihe 2 und die Profilblockreihe 3 sind in axialer Richtung A durch eine Umfangsrille 6 voneinander beabstandet, welche sich über den gesamten Umfang des Fahrzeugluftreifens erstreckt und in Umfangsrichtung U ausgerichtet ist. Die Profilblockreihe 3 und die Schulterrippe 4 sind in axialer Richtung A durch eine Umfangsrille 18 voneinander beabstandet, welche sich über den gesamten Umfang des Fahrzeugluftreifens erstreckt und in Umfangsrichtung U ausgerichtet ist.

Die Schulterrippen 1 und 4 sind jeweils ausgehend von der benachbarten Umfangsrille 5 bzw. 8 mit in Umfangsrichtung U hintereinander angeordneten Quer- bzw. Schrägrillen versehen ausgebildet, welche sich ausgehend von der jeweiligen Umfangsrille 5 bzw. 18 in die jeweilige Profilrippe 1 bzw. 4 hinein erstrecken und dort enden.

Die Profilblockreihe 2 ist aus in Umfangrichtung U hintereinander angeordneten und jeweils durch Schrägrillen 8, welche sich in axialer Richtung A ausgehend von der Umfangsrille 5 bis zur Umfangsrille 6 erstrecken, voneinander beabstandeten Profilblockelementen 7 ausgebildet. Die Profilblockreihe 3 ist aus in Umfangsrichtung U hintereinander angeordneten und jeweils durch Schrägrillen 10, welche sich in axialer Richtung A von der Umfangsrille 6 bis zur Umfangsrille 18 erstrecken, voneinander beabstandeten Profilblockelementen 9 ausgebildet.

Der weitere Aufbau der Profilblockreihen 2 und 3 wird im Folgenden anhand der Profilblockreihe 3 exemplarisch erläutert.

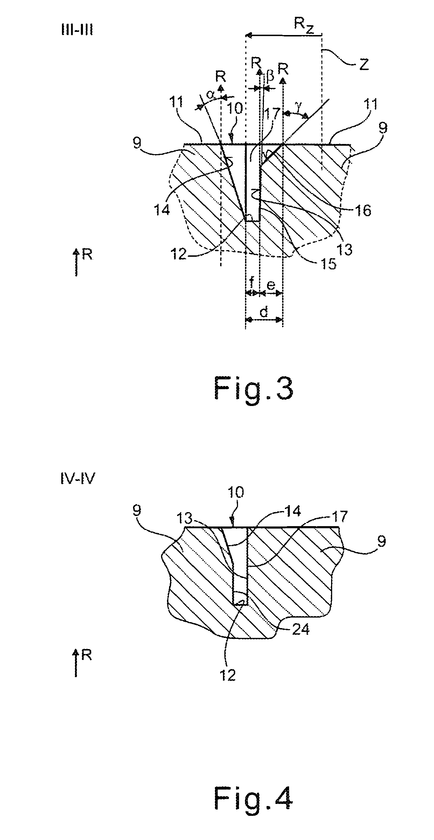

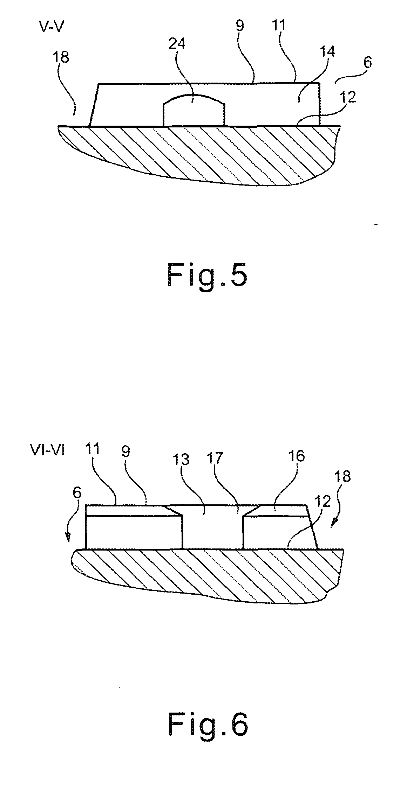

Die Profilblockelemente 9 der Profilblockreihe 3 sind nach radial außen hin von einer - wie in den Figuren 3 bis 6 dargestellten - radial äußeren Oberfläche 11 begrenzt, welche die Straßenkontaktoberfläche der Profilblockelemente 9 bilden. Die Profilblockreihe 3 ist - wie in Fig. 1 dargestellt ist - mit einer in axialer Richtung A gemessenen Breite b ausgebildet.

Die Schrägrillen 10 sind ebenfalls mit einer ausgehend von der Umfangsrille 6 bis zur Umfangsrille 18 in axialer Richtung A gemessenen Breite b ausgebildet.

Die Schrägrillen 10 sind - wie in den Figuren 2 bis 6 dargestellt ist - nach radial innen hin von einem sich längs der gesamten Erstreckung der Schrägrille 10 von Umfangsrille 6 bis Umfangsrille 18 erstreckten Rillengrund 12 mit einer jeweils senkrecht zur Erstreckungsrichtung gemessenen Breite f des Rillengrundes 12 ausgebildet.

Die Schrägrille 10 ist dabei in Umfangsrichtung U jeweils zur Seite des einen von ihr begrenzten Profilblockelementes 9 hin von einer die zur Schrägrille 10 hin weisenden Flanke 13 dieses Profilblockelementes 9 gebildeten Rillenwand und zur Seite des anderen von ihr begrenzten Profilblockelementes 9 hin von einer die zur Schrägrille 10 hin weisenden Flanke 14 dieses anderen Profilblockelementes 9 gebildeten Rillenwand begrenzt. Die Flanke 13 und die Flanke 14 erstrecken sich dabei ausgehend vom Rillengrund 12 in radialer Richtung nach außen bis zur radial äußeren Oberfläche 11 des jeweiligen Profilblockelementes 9.

Die Flanke 13 bildet im montierten Zustand des Fahrzeugluftreifens auf ein Fahrzeug bei Vorwärtsfahrt des Fahrzeuges eine dem zugeordneten Profilblockelement 9 vorgeordnete Flanke und die Flanke 14 eine ihrem zugeordneten Profilblockelement 9 nachgeordnete Flanke.

Wie in Fig. 1 dargestellt ist, ist die Schrägrille 10 dabei jeweils in axialer Richtung A ausgehend von der Umfangsrille 6 zunächst aus einem ersten Randerstreckungsbereich mit der in axialer Richtung A gemessenen Erstreckungslänge a, einem sich in axialer Richtung A dem ersten Randerstreckungsbereich sich anschließenden mittleren Erstreckungsbereich mit der in axialer Richtung gemessenen Erstreckungslänge c und einem sich dem mittleren Erstreckungsbereich in axialer Richtung A anschließenden zweiten Randerstreckungsbereich mit der in axialer Richtung gemessenen Erstreckungslänge a, welcher sich bis zur Umfangsrille 18 erstreckt, ausgebildet. Die beiden Randerstreckungsbereiche sind im Ausführungsbeispiel jeweils mit der gleichen in axialer Richtung A gemessenen Erstreckungslänge a ausgebildet. Für die Erstreckungslängen a und c gilt: (2a + c) = b sowie (1/3)b ≤ c ≤ (2/3)b. Im dargestellten Ausführungsbeispiel ist c = (b/2) gewählt.

In den beiden Randerstreckungsbereichen der Schrägrille 10 ist - wie in den Figuren 3, 6 und 5 zu erkennen ist - die Flanke 14 ausgehend vom Rillengrund 12 in radialer Richtung R nach außen bis zur radial äußeren Oberfläche 11 des durch die Flanke 14 begrenzten Profilblockelementes 9 in allen senkrecht zum Erstreckungsverlauf der Schrägrille 10 gebildeten Schnittebenen geradlinig unter Einschluss eines Neigungswinkels α zur radialen Richtung R verlaufend ausgebildet. Die Neigungsrichtung der Flanke 14 ist so gewählt, dass sich die Flanke 14 von radial innen nach außen gesehen zum zugehörigen Profilblockelement 9 hin und von der Schrägrille 10 weg neigt. In den beiden Randerstreckungsbereichen der Schrägrille 10 ist die Flanke 13 aus einem ersten wesentlichen radial inneren Erstreckungsbereich 15, welcher sich ausgehend vom Rillengrund 12 bis in die Nähe der radial äußeren Oberfläche 11 des durch die Flanke 13 begrenzten Profilblockelementes 9 erstreckt, und einem sich anschließenden radial äußeren kurzen radialen Erstreckungsabschnitt 16 ausgebildet, welcher sich bis zur radial äußeren Oberfläche 11 erstreckt. In den Schnittebenen senkrecht zur Erstreckungsrichtung der Schrägrille 10 ist die Flanke 13 im radial inneren Erstreckungsbereich 15 geradlinig unter Einschluss eines Winkels β zur radialen Richtung R verlaufend und im Erstreckungsabschnitt 16 geradlinig unter Einschluss eines Winkels γ zur Radialen R verlaufend ausgebildet, wobei β und γ jeweils so gewählt sind, dass die Flanke im jeweiligen radialen Erstreckungsabschnitt zu dem durch sie begrenzten Profilblockelement 9 hin und von der Schrägrille 10 weg geneigt ist. Die Winkel γ, α und β sind mit γ > α > β gewählt.

Der Winkel γ ist dabei mit 30° ≤ γ ≤ 70° gewählt. Im dargestellten Ausführungsbeispiel ist γ = 45° gewählt. Der radial äußere Erstreckungsabschnitt 16 der Flanke 13 bildet eine im radial äußeren Erstreckungsbereich der Flanke 13 ausgebildete Phase.

Im dargestellten Ausführungsbeispiel ist β = 1°, α = 10° und γ = 45° gewählt.

In Fig. 3 ist die in den Schnittebenen senkrecht zur Erstreckungsrichtung der Schrägrille 10 gemessene Erstreckungsbreite e des radial äußeren Erstreckungsbereichs 16 dargestellt.

Wie in den Figuren 1, 2, 3, 4, 5 und 6 zu erkennen ist, ist im mittleren Erstreckungsabschnitt der Schrägrille 10 jeweils die Flanke 13 mit einer in die Schrägrille 10 hinein ragenden kreiszylindersegmentförtnigen, einen Vorsprung bildenden Ausbeulung 17 ausgebildet. Der Kreiszylinder ist ein Kreiszylinder mit einer in dem durch die Flanke 13 begrenzten Profilblockelement 9 ausgebildeten Zylinderachse Z, welche sich in radialer Richtung R des Reifens erstreckt, und mit einem Zylinderradius R_{z}. Das ausgebildete Kreiszylindersegment erstreckt sich dabei ausgehend vom Rillengrund 12 der Schrägrille 10 bis zur radial äußeren Oberfläche 11 über die gesamte axiale Erstreckungsbreite c des mittleren Erstreckungsabschnitts.

Das ausgebildete Kreiszylindersegment reicht an der radial äußeren Oberfläche 11 ausgehend von den Schnittkanten der radial äußeren Oberfläche 11 mit dem die Phase bildenden Erstreckungsabschnittes 16 der Flanke 13 der benachbarten axial äußeren Erstreckungsabschnitte bis in einen Abstand d von diesen Schnittkanten in die Schrägrille 10 hinein mit d = e + f. Die kreiszylindersegmentförmige Ausbeulung 17 erstreckt sich somit bis in die Position der Flanken 14 in den beiden axial äußeren Randabschnitten der Flanke 14, die diese in ihrem Schnitt mit dem Rillengrund 12 am Übergang vom Randerstreckungsbereich zum mittleren Erstreckungsbereich der Flanke 14 einnehmen.

Korrespondierend zur kreiszylindersegmentförtnigen Ausbeulung 17 der Flanke 13 ist die Flanke 14 im mittleren Erstreckungsabschnitt der Schrägrille 10 mit einer kreiszylindersegmentförtnigen Einbuchtung 24 ausgebildet, deren Zylinderform koaxial zur zylindersegmentfönnigen Ausbeulung 17 der Flanke 13 angeordnet ist. Der Radius der zylindersegmentförmigen Einbuchtung 24 ist dabei größer gewählt als der Radius R_{Z} der zylinderförtnigen Ausbeulung 17, wobei die Differenz der beiden Radien im dargestellten Ausführungsbeispiel der Rillenbreite f der Schrägrille 10 im Bereich des Rillengrundes 12 in den beiden axial äußeren Randbereichen der Rille 10 entspricht. Die Rillenbreite f im Bereich des Rillengrundes 12 ist mit 0,8 mm ≤ f ≤ 2mm gewählt, beispielsweise ist f = 1mm ausgebildet.

Die senkrecht zur Erstreckungsrichtung der Schrägrille 10 gemessene Erstreckungsbreite e des radial äußeren Erstreckungsbereichs 16 ist mit 0,5mm ≤ e ≤ 4mm ausgebildet.

Die Schrägrille 10 ist beispielsweise mit einer ausgehend von der radial äußeren Oberfläche 11 der sie begrenzenden Profilblockelemente 9 bis zum Rillengrund 12 in radialer Richtung R gemessenen maximalen Profiltiefe P_{T} mit 7mm ≤ Pro 9 mm, beispielsweise mit P_{T} = 8mm ausgebildet.

Die Schrägrillen 10 sind unter Einschluss eines Neigungswinkels von 0° bis 60° zur axialen Richtung A verlaufend ausgebildet. Im dargestellten Ausführungsbeispiel ist der Neigungswinkel des Erstreckungsverlaufs der Schrägrillen 10 zur Axialen A mit 45° gewählt.

### Bezugszeichenliste

### (Teil der Beschreibung)

- 1: Profilrippe
- 2: Profilblockreihe
- 3: Profilblockreihe
- 4: Profilrippe
- 5: Umfangsrille
- 6: Umfangsrille
- 7: Profilblockelement
- 8: Schrägrille
- 9: Profilblockelement
- 10: Schrägrille
- 11: Radial äußere Oberfläche
- 12: Rillengrund
- 13: Flanke
- 14: Flanke
- 15: Innerer Erstreckungsbereich
- 16: Fase
- 17: Zylindersegmentförmige Ausbeulung
- 18: Umfangsrille
- 19 20 21 22 23 24: Zylindersegmentförmige Einbuchtung

## Patentansprüche

1. Laufstreifenprofil eines Fahrzeugluftreifens mit wenigstens einer in Umfangsrichtung U des Fahrzeugreifens ausgerichteten und über den Umfang erstreckten Profilblockreihe (2,3), welche in axialer Richtung A zu beiden Seiten hin jeweils durch eine Umfangsrille (56, 18) begrenzt und aus in Umfangsrichtung hintereinander angeordneten, von der einen (6) zur anderen (518) Umfangsrille erstreckten quer oder schräg verlaufenden Rillen (10) von einander beabstandeten 7 Profilblockelementen (79) ausgebildet ist, wobei die Profilblockelemente (79) nach radial außen von einer die Bodenkontaktfläche bildenden radial äußeren Oberfläche (11) begrenzt sind, wobei die Rillen (10) in radialer Richtung R nach innen jeweils von einem Rillengrund (12) und in Umfangsrichtung U beiderseits des Rillengrundes (12) jeweils durch eine Rillenwand begrenzt sind, die sich ausgehend vom Rillengrund (12) nach radial außen bis zu der radial äußeren Oberfläche (11) des von ihr begrenzten Profilblockelementes (79) erstreckt und dabei jeweils die zur Rille (10) hin gerichtete Flanke (13,14) des Profilblockelementes (79) bildet,
**dadurch gekennzeichnet,**
**dass** die Rille (10) in ihrer Erstreckung von Umfangsrille (6) zu Umfangsrille (18) aus zwei Randbereichen, welche jeweils an eine der Umfangsrillen (6,18) angrenzen, und aus einem zwischen den Randbereichen angeordneten Mittenbereich ausgebildet ist, wobei in den Randbereichen jeweils in den Querschnittsebenen senkrecht zum Rillenverlauf die erste durch die Rille (10) begrenzte Flanke (13) aus einem in radialer Richtung R inneren Erstreckungsbereich (15) mit einem Neigungswinkels β zur Radialen R und aus einem kleineren, eine Fase bildenden äußeren Erstreckungsbereich (16) mit einem Neigungswinkels γ zur Radialen R und die zweite durch die Rille (10) begrenzte Flanke (14) im wesentlichen über ihre gesamte radiale Erstreckung mit einem Neigungswinkels α zur Radialen R ausgebildet ist mit γ>α>β,
**dass** im mittleren Erstreckungsbereich die erste Flanke (13) eine zylindersegmentförmige Ausbeulung (17) des durch sie begrenzten Profilblockelementes (9) in die Rille (10) hinein und die zweite Flanke (14) eine korrespondierend hierzu ausgebildete zylindersegmentförmige Ausnehmung (24) des durch sie begrenzten Profilblockelementes (9) bildet, wobei die Zylinderachsen Z der beiden Zylinder im Wesentlichen in radialer Richtung R verlaufen.

2. Laufstreifenprofil gemäß den Merkmalen von Anspruch 1,
wobei die Zylinder der beiden Zylindersegmente (17,24) koaxiale Zylinder sind.

3. Laufstreifenprofil gemäß den Merkmalen von Anspruch 1 oder 2,
wobei die zylindersegmentförmige Ausbeulung (17) der ersten Flanke (13) soweit in die Rille (10) hinein erstreckt ausgebildet ist, dass sie im Rillengrund (12) die Verbindungslinie der Randbereiche der zweiten Flanke (15) berührt.

4. Laufstreifenprofil gemäß den Merkmalen von einem oder mehreren der vorangegangenen Ansprüche,
wobei die in axialer Richtung A des Reifens gemessene Erstreckungslänge c des Mittenbereichs mit (1/3)b ≤ c ≤ (2/3)b - insbesondere mit c = (b/2) - ausgebildet ist, wobei b die in axialer Richtung A des Reifens zwischen den beiden Umfangsrillen (6,18) gemessene Erstreckungslänge der Rille (10) angibt.

5. Laufstreifenprofil gemäß den Merkmalen von einem oder mehreren der vorangegangenen Ansprüche,
wobei die in axialer Richtung A des Reifens gemessene Erstreckungslänge a der Randbereiche und die in axialer Richtung A des Reifens gemessene Erstreckungslänge c des Mittenbereichs mit (2a)+c=b ausgebildet sind, wobei b die in axialer Richtung A des Reifens zwischen den beiden Umfangsrillen (6,18) gemessene Erstreckungslänge der Rille (10) angibt.

6. Laufstreifenprofil gemäß den Merkmalen von einem oder mehreren der vorangegangenen Ansprüche,
wobei γ mit 30° ≤γ ≤70° - insbesondere mit γ =45° - ausgebildet ist.

## Claims

1. Tread profile of a pneumatic vehicle tyre having at least one profile block row (2, 3) aligned in the circumferential direction U of the vehicle tyre and made to extend over the circumference, which row is bounded in the axial direction A towards both sides by a respective circumferential groove (5, 6, 18) and is formed from profile block elements (7, 9) arranged behind one another in the circumferential direction and spaced apart by transversely or obliquely running grooves (10) made to extend from one (6) to the other (5, 18) circumferential groove, wherein the profile block elements (7, 9) are bounded radially outwardly by a radially outer surface (11) forming the ground contact area, wherein the grooves (10) are bounded inwardly in the radial direction R in each case by a groove base (12) and are bounded in the circumferential direction U on both sides of the groove base (12) in each case by a groove wall which, starting from the groove base (12), extends radially outwardly as far as the radially outer surface (11) of the profile block element (7, 9) bounded thereby and in so doing in each case forms the flank (13, 14) of the profile block element (7, 9) that is directed towards the groove (10), **characterized in that** the groove (10) in its extent from circumferential groove (6) to circumferential groove (18) is formed from two edge regions, which in each case adjoin one of the circumferential grooves (6, 18), and from a central region arranged between the edge regions, wherein in the edge regions in each case in the cross section planes perpendicular to the groove profile, the first flank (13) bounded by the groove (10) is formed from an inner, in the radial direction R, region of extent (15) having an angle of inclination β to the radial R and from a smaller, outer region of extent (16) forming a bevel and having an angle of inclination γ to the radial R, and the second flank (14) bounded by the groove (10) is formed substantially over its entire radial extent with an angle of inclination α to the radial R, with γ > α > β, **in that** in the central region of extent the first flank (13) forms a cylinder segment-shaped bulge (17) of the profile block element (9) bounded thereby into the groove (10) and the second flank (14) forms a correspondingly formed cylinder segment-shaped recess (24) of the profile block element (9) bounded thereby, wherein the cylinder axes Z of the two cylinders run substantially in the radial direction R.

2. Tread profile according to the features of Claim 1, wherein the cylinders of the two cylinder segments (17, 14) are coaxial cylinders.

3. Tread profile according to the features of Claim 1 or 2, wherein the cylinder segment-shaped bulge (17) of the first flank (13) is designed to extend into the groove (10) to such an extent that in the groove base (12) it contacts the connecting line of the edge regions of the second flank (15).

4. Tread profile according to the features of one or more of the preceding claims, wherein the length of extent c of the central region as measured in the axial direction A of the tyre is formed with (1/3)b ≤ c ≤ (2/3)b - in particular with c = (b/2) -, where b indicates the length of extent of the groove (10) as measured in the axial direction A of the tyre between the two circumferential grooves (6, 18).

5. Tread profile according to the features of one or more of the preceding claims, wherein the length of extent a of the edge regions as measured in the axial direction A of the tyre and the length of extent c of the central region as measured in the axial direction A of the tyre are formed with (2a) + c = b, where b indicates the length of extent of the groove (10) as measured in the axial direction A of the tyre between the two circumferential grooves (6, 18).

6. Tread profile according to the features of one or more of the preceding claims, where γ is formed with 30° ≤ γ ≤ 70° - in particular with γ = 45°.

## Revendications

1. Profil de bande de roulement d'un bandage pneumatique de véhicule, comprenant au moins une rangée de blocs profilés (2, 3) s'étendant sur la périphérie et orientée dans la direction périphérique U du bandage de véhicules, laquelle rangée de blocs profilés est limitée dans la direction axiale A vers les deux côtés à chaque fois par une gorge périphérique (5, 6, 18) et est réalisée à partir de gorges (10) d'éléments de blocs profilés (7, 9) espacés les uns des autres, disposées les unes derrière les autres dans la direction périphérique s'étendant transversalement ou obliquement de l'une (6) à l'autre (5, 18) gorge périphérique, les éléments de blocs profilés (7, 9) étant limités radialement à l'extérieur par une surface (11) radialement extérieure formant la surface de contact avec le sol, les gorges (10) étant limitées dans la direction radiale R vers l'intérieur à chaque fois par un fond de gorge (12) et dans la direction périphérique U de chaque côté du fond de gorge (12) à chaque fois par une paroi de gorge, qui s'étend depuis le fond de gorge (12) radialement vers l'extérieur jusqu'à la surface radialement extérieure (11) de l'élément de bloc profilé (7, 9) limité par celle-ci et en l'occurrence forme à chaque fois le flanc (13, 14) de l'élément de bloc profilé (7, 9) orienté vers la gorge (10),
**caractérisé en ce que**
la gorge (10) est constituée dans son étendue de la gorge périphérique (6) à la gorge périphérique (18), de deux régions de bord, qui sont à chaque fois adjacentes à l'une des gorges périphériques (6, 18), et d'une région centrale disposée entre les régions de bord, le premier flanc (13) limité par la gorge (10) dans les régions de bord à chaque fois dans les plans en section transversale perpendiculairement à l'étendue des gorges étant réalisé à partir d'une région d'étendue interne (15) dans la direction radiale R avec un angle d'inclinaison β par rapport à la radiale R et à partir d'une plus petite région d'étendue extérieure (16) formant un biseau avec un angle d'inclinaison γ par rapport à la radiale R et le deuxième flanc (14) limité par la gorge (10) étant réalisé essentiellement sur toute son étendue radiale avec un angle d'inclinaison α par rapport à la radiale R, avec γ>α>β,
**en ce que** dans la région d'étendue centrale, le premier flanc (13) forme une protubérance en forme de segment de cylindre (17) de l'élément de bloc profilé (9) limité par celui-ci dans la gorge (10) et le deuxième flanc (14) forme un évidement en forme de segment de cylindre (24) réalisée de manière correspondante de l'élément de bloc profilé (9) limité par celui-ci, les axes des cylindres Z des deux cylindres s'étendant essentiellement dans la direction radiale R.

2. Profil de bande de roulement selon les caractéristiques de la revendication 1,
dans lequel les cylindres des deux segments de cylindre (17, 24) sont des cylindres coaxiaux.

3. Profil de bande de roulement selon les caractéristiques de la revendication 1 ou 2,
dans lequel la protubérance en forme de segment de cylindre (17) du premier flanc (13) est réalisée de manière à s'étendre dans la gorge (10) jusqu'à ce qu'elle vienne en contact dans le fond de gorge (12) avec la ligne de connexion des régions de bord du deuxième flanc (15).

4. Profil de bande de roulement selon les caractéristiques d'une ou plusieurs des revendications précédentes,
dans lequel la longueur d'étendue c de la région centrale mesurée dans la direction axiale A du bandage est réalisée avec (1/3)b ≤ c ≤ (2/3)b, en particulier avec c = (b/2), b indiquant la longueur d'étendue de la gorge (10) mesurée dans la direction axiale A du bandage entre les deux gorges périphériques (6, 18).

5. Profil de bande de roulement selon les caractéristiques d'une ou plusieurs des revendications précédentes,
dans lequel la longueur d'étendue a mesurée dans la direction axiale A du bandage des régions de bord et la longueur d'étendue c mesurée dans la direction axiale A du bandage de la région centrale sont réalisées avec (2a)+c = b, b indiquant la longueur d'étendue de la gorge (10) mesurée dans la direction axiale A du bandage entre les deux gorges périphériques (6, 18).

6. Profil de bande de roulement selon les caractéristiques d'une ou plusieurs des revendications précédentes,
dans lequel γ est réalisé avec 30° ≤ γ ≤ 70°, en particulier avec γ = 45°.
